# EUROPEAN PATENT APPLICATION

(11) **EP 4 780 047 A1**
(43) Date of publication of application: **22.07.2026**
(21) Application number: 23952719.5
(22) Date of filing: 22.09.2023
(51) Int. Cl.: H04W 24/02

(54) **COMMUNICATION METHOD AND RELATED APPARATUS**

(71) Applicant: HUAWEI TECHNOLOGIES CO., LTD., Shenzhen 518129 (CN)
(72) Inventor: WANG, Jian, Shenzhen, Guangdong 518129 (CN); LI, Rong, Shenzhen, Guangdong 518129 (CN)
(74) Representative: Körber, Martin Hans
(86) International application number: PCT/CN2023/120708
(87) International publication number: WO 2025/060065

(57) **Abstract**

A communication method and a related apparatus are provided, and are applied to the communication field. The method includes: obtaining learning-related status information associated with an artificial intelligence AI task, where the learning-related status information includes one or more of resource status information, environment status information, model performance information, and dataset status information; and sending the learning-related status information, where the learning-related status information is used to perform lifecycle management on a model associated with the AI task. In the solutions, operations such as reporting of the learning-related status information can be performed for the specific task, so that impact of at least one of factors such as a resource status, an environment status, model performance, and a dataset status is considered as much as possible when lifecycle management is performed on the model associated with the AI task, thereby improving efficiency and accuracy of model lifecycle management.

## Description

### TECHNICAL FIELD

This application relates to the communication field, and specifically, to a communication method and a related apparatus.

### BACKGROUND

To achieve future inclusive intelligence, intelligence further evolves at a wireless network architecture level, and artificial intelligence (Artificial Intelligence, AI) is further deeply integrated with wireless networks, to implement native network intelligence and terminal intelligence, to cope with the following new requirements and new scenarios: Terminal types are diversified, terminal connections are more flexible and intelligent, and terminals have specific AI capabilities. For the native network intelligence, in addition to providing conventional communication connection services, networks further provide computing and AI services, to better support inclusive, real-time, and highly secure AI services. These new requirements and new scenarios bring changes to wireless network architectures and communication modes.

Therefore, after the AI is integrated with the wireless networks, how to better improve efficiency and accuracy of model lifecycle management in communication systems is a hot topic that is being studied by persons skilled in the art.

### SUMMARY

Embodiments of this application provide a communication method and a related apparatus. Operations such as reporting of learning-related status information can be performed for a specific task, so that impact of at least one of factors such as a resource status, an environment status, model performance, and a dataset status is considered as much as possible when lifecycle management is performed on a model associated with an AI task, thereby improving efficiency and accuracy of model lifecycle management.

According to a first aspect, an embodiment of this application provides a communication method. The method may be performed by an apparatus. The apparatus may be a device (for example, a terminal device, or for another example, a network device), or may be a component (for example, a chip, a chip system, or a circuit) of the device. This is not limited in this application.

The method includes:
obtaining learning-related status information associated with an artificial intelligence AI task, where the learning-related status information includes one or more of resource status information, environment status information, model performance information, and dataset status information; and
sending the learning-related status information, where the learning-related status information is used to perform lifecycle management on a model associated with the AI task.

In the foregoing method, operations such as reporting of the learning-related status information can be performed for the specific task, so that impact of at least one of factors such as a resource status, an environment status, model performance, and a dataset status is considered as much as possible when lifecycle management is performed on the model associated with the AI task, thereby improving efficiency and accuracy of model lifecycle management.

In a possible implementation, before obtaining the learning-related status information, the method further includes:
receiving indication information, where the indication information indicates a manner of sending the learning-related status information.

In another possible implementation, the indication information includes reference time. Sending the learning-related status information includes:
sending the learning-related status information when the reference time is met.

In the foregoing method, the manner of sending the learning-related status information can be sending the learning-related status information on schedule through implementation of a condition set by using a timer.

In another possible implementation, the indication information includes a trigger condition. Sending the learning-related status information includes:
sending the learning-related status information when the trigger condition is met.

In the foregoing method, the manner of sending the learning-related status information can be sending the learning-related status information through implementation of the specified trigger condition.

In another possible implementation, the method further includes:
sending indication information of a task identifier, where the indication information of the task identifier indicates the associated AI task.

In the foregoing method, the task identifier can be carried in the learning-related status information, or can be independent. In another possible implementation, the resource status information includes a resource headroom. The resource headroom includes a computing power headroom and/or a storage headroom.

In the foregoing method, specific content of the resource status information is reflected.

In another possible implementation, the resource status information includes a plurality of task identifiers and a plurality of resource headrooms. Each of the plurality of task identifiers represents an AI task associated with one of the plurality of resource headrooms.

In the foregoing method, content of the resource status information of a plurality of associated AI tasks is reflected.

In another possible implementation, the resource status information is carried in medium access control control element (Medium Access Control Control Element, MAC-CE) signaling. The MAC-CE signaling includes a task identifier field and a resource headroom (Computing Power Headroom, CPH) field. The task identifier field includes the task identifier. The CPH field includes the resource headroom.

In the foregoing method, a field format of the MAC-CE signaling that carries the resource status information is reflected.

In another possible implementation, the method further includes:
sending first indication information, where the first indication information indicates that the learning-related status information is from a first-type AI task or a second-type AI task, the first-type AI task includes one or more preset tasks, and the second-type AI task includes one or more AI tasks other than the first-type AI task.

In the foregoing method, the first-type task can be one or more tasks preset in a standard or a system, for example, CSI compression feedback, beam prediction, positioning enhancement, and transceiver data transmission. However, a user using a communication system may subsequently use the second-type AI task. AI tasks of this type on each terminal or network device or in each area are different. Therefore, a general learning-related status, namely, a common learning-related status, is set for the second-type task, to improve reporting efficiency of the learning-related status information and reduce resources.

In another possible implementation, the first indication information is a task identifier.

In the foregoing method, the first indication information may separately indicate whether the learning-related status information is from the specific task, or may indicate that the learning-related status information is from the specific task or a common task and then further use the task identifier additionally.

In another possible implementation, the environment status information includes first parameter information. The first parameter information includes one or more of a system parameter, a scenario type, and a model identifier.

In the foregoing method, specific content of the environment status information is reflected.

In another possible implementation, the environment status information includes a plurality of task identifiers and a plurality of pieces of first parameter information. Each of the plurality of task identifiers represents an AI task associated with one of the plurality of pieces of first parameter information.

In the foregoing method, content of the environment status information of a plurality of associated AI tasks is reflected.

In another possible implementation, the environment status information is carried in MAC-CE signaling. The MAC-CE signaling includes a task identifier field, a system parameter field, a scenario type field, and a model identifier field. The task identifier field includes the task identifier. The system parameter field includes the system parameter. The scenario type field includes the scenario type. The model identifier field includes the model identifier.

In the foregoing method, a field format of the MAC-CE signaling that carries the environment status information is reflected.

In another possible implementation, the model performance information includes second parameter information. The second parameter information includes one or more of a model identifier, model performance, fallback performance, and a fallback indication. The model performance represents performance of a model used for the associated AI task. The fallback performance represents system performance after the associated AI task falls back from model execution to non-model execution. The fallback indication represents whether fallback needs to be performed on the associated AI task. The model identifier includes a model identifier of one or more models in the model associated with the AI task.

In the foregoing method, specific content of the model performance information is reflected.

In another possible implementation, the model performance information includes a plurality of task identifiers and a plurality of pieces of second parameter information. Each of the plurality of task identifiers represents an AI task associated with one of the plurality of pieces of second parameter information.

In the foregoing method, content of the model performance information of a plurality of associated AI tasks is reflected.

In another possible implementation, the model performance information is carried in MAC-CE signaling. The MAC-CE signaling includes a task identifier field, a model identifier field, a model performance field, a fallback performance field, and a fallback indication field. The task identifier field includes the task identifier. The model identifier field includes the model identifier. The model performance field includes the model performance. The fallback performance field includes the fallback performance. The fallback indication field includes the fallback indication.

In the foregoing method, a field format of the MAC-CE signaling that carries the model performance information is reflected.

In another possible implementation, the dataset status information includes third parameter information. The third parameter information includes one or more of a dataset size, data collection time, a data collection position, and a data distribution description. The data collection time includes collection time of a latest data sample in a dataset collected for the associated AI task and collection time of an oldest data sample in the dataset. The dataset size represents a quantity of data samples in the dataset collected for the associated AI task. The data collection position represents a position of data in the dataset collected for the associated AI task. The data distribution description represents distribution of the data in the dataset collected for the associated AI task.

In the foregoing method, specific content of the dataset status information is reflected.

In another possible implementation, the dataset status information includes a plurality of task identifiers and a plurality of pieces of third parameter information. Each of the plurality of task identifiers represents an AI task associated with one of the plurality of pieces of third parameter information.

In the foregoing method, content of the dataset status information of a plurality of associated AI tasks is reflected.

In another possible implementation, the dataset status information is carried in MAC-CE signaling. The MAC-CE signaling includes a task identifier field, a dataset size field, a latest data collection time field, an oldest data collection time field, a data collection position field, and a data distribution description field. The task identifier field includes the task identifier. The dataset size field includes the dataset size. The latest data collection time field includes the latest data collection time. The oldest data collection time field includes the oldest data collection time. The data collection position field includes the data collection position. The data distribution description field includes the data distribution description.

In the foregoing method, a field format of the MAC-CE signaling that carries the dataset status information is reflected.

**According to a second aspect,** this application further provides a communication method. The communication method according to this aspect corresponds to the communication method according to the first aspect. The method may be performed by an apparatus. The apparatus may be a device (for example, a terminal device, or for another example, a network device), or may be a component (for example, a chip, a chip system, or a circuit) of the device. This is not limited in this application. The method includes:
receiving learning-related status information associated with an AI task, where the learning-related status information includes one or more of resource status information, environment status information, model performance information, and dataset status information; and
performing, based on the learning-related status information, lifecycle management on a model associated with the AI task.

In the foregoing method, efficiency and accuracy of performing, based on the received learning-related status information of the associated AI task, lifecycle management on the model associated with the AI task can be improved.

In a possible implementation, before receiving the learning-related status information, the method further includes:
sending indication information, where the indication information indicates a manner of sending the learning-related status information.

In another possible implementation, the indication information includes reference time. The indication information indicates to send the learning-related status information when the reference time is met.

In the foregoing method, the manner of sending the learning-related status information can be sending the learning-related status information on schedule through implementation of a condition set by using a timer.

In another possible implementation, the indication information includes a trigger condition. The indication information indicates to send the learning-related status information when the trigger condition is met.

In the foregoing method, the manner of sending the learning-related status information can be sending the learning-related status information through implementation of the specified trigger condition.

In another possible implementation, the method further includes:
receiving indication information of a task identifier, where the indication information of the task identifier indicates the associated AI task.

In the foregoing method, the task identifier can be carried in the learning-related status information, or can be independent.

In another possible implementation, the resource status information includes a resource headroom. The resource headroom includes a computing power headroom and/or a storage headroom.

In the foregoing method, specific content of the resource status information is reflected.

In another possible implementation, the resource status information includes a plurality of task identifiers and a plurality of resource headrooms. Each of the plurality of task identifiers represents an AI task associated with one of the plurality of resource headrooms.

In the foregoing method, content of the resource status information of a plurality of associated AI tasks is reflected.

In another possible implementation, the resource status information is carried in MAC-CE signaling. The MAC-CE signaling includes a task identifier field and a CPH field. The task identifier field includes the task identifier. The CPH field includes the resource headroom.

In the foregoing method, a field format of the MAC-CE signaling that carries the resource status information is reflected.

In another possible implementation, the method further includes:
receiving first indication information, where the first indication information indicates that the learning-related status information is from a first-type AI task or a second-type AI task, the first-type AI task includes one or more preset tasks, and the second-type AI task includes one or more AI tasks other than the first-type AI task.

In the foregoing method, the first-type task can be one or more tasks preset in a standard or a system, for example, CSI compression feedback, beam prediction, positioning enhancement, and transceiver data transmission. However, a user using a communication system may subsequently use the second-type AI task. AI tasks of this type on each terminal or network device or in each area are different. Therefore, a general learning-related status, namely, a common learning-related status, is set for the second-type task, to improve reporting efficiency of the learning-related status information and reduce resources.

In another possible implementation, the first indication information is a task identifier.

In the foregoing method, the first indication information may separately indicate whether the learning-related status information is from a specific task, or may indicate that the learning-related status information is from the specific task or a common task and then further use the task identifier additionally.

In another possible implementation, the environment status information includes first parameter information. The first parameter information includes one or more of a system parameter, a scenario type, and a model identifier.

In the foregoing method, specific content of the environment status information is reflected.

In another possible implementation, the environment status information includes a plurality of task identifiers and a plurality of pieces of first parameter information. Each of the plurality of task identifiers represents an AI task associated with one of the plurality of pieces of first parameter information.

In the foregoing method, content of the environment status information of a plurality of associated AI tasks is reflected.

In another possible implementation, the environment status information is carried in MAC-CE signaling. The MAC-CE signaling includes a task identifier field, a system parameter field, a scenario type field, and a model identifier field. The task identifier field includes the task identifier. The system parameter field includes the system parameter. The scenario type field includes the scenario type. The model identifier field includes the model identifier.

In the foregoing method, a field format of the MAC-CE signaling that carries the environment status information is reflected.

In another possible implementation, the model performance information includes second parameter information. The second parameter information includes one or more of a model identifier, model performance, fallback performance, and a fallback indication. The model performance represents performance of a model used for the associated AI task. The fallback performance represents system performance after the associated AI task falls back from model execution to non-model execution. The fallback indication represents whether fallback needs to be performed on the associated AI task. The model identifier includes a model identifier of one or more models in the model associated with the AI task.

In the foregoing method, specific content of the model performance information is reflected.

In another possible implementation, the model performance information includes a plurality of task identifiers and a plurality of pieces of second parameter information. Each of the plurality of task identifiers represents an AI task associated with one of the plurality of pieces of second parameter information.

In the foregoing method, content of the model performance information of a plurality of associated AI tasks is reflected.

In another possible implementation, the model performance information is carried in MAC-CE signaling. The MAC-CE signaling includes a task identifier field, a model identifier field, a model performance field, a fallback performance field, and a fallback indication field. The task identifier field includes the task identifier. The model identifier field includes the model identifier. The model performance field includes the model performance. The fallback performance field includes the fallback performance. The fallback indication field includes the fallback indication.

In the foregoing method, a field format of the MAC-CE signaling that carries the model performance information is reflected.

In another possible implementation, the dataset status information includes third parameter information. The third parameter information includes one or more of a dataset size, data collection time, a data collection position, and a data distribution description. The data collection time includes collection time of a latest data sample in a dataset collected for the associated AI task and collection time of an oldest data sample in the dataset. The dataset size represents a quantity of data samples in the dataset collected for the associated AI task. The data collection position represents a position of data in the dataset collected for the associated AI task. The data distribution description represents distribution of the data in the dataset collected for the associated AI task.

In the foregoing method, specific content of the dataset status information is reflected.

In another possible implementation, the dataset status information includes a plurality of task identifiers and a plurality of pieces of third parameter information. Each of the plurality of task identifiers represents an AI task associated with one of the plurality of pieces of third parameter information.

In the foregoing method, content of the dataset status information of a plurality of associated AI tasks is reflected.

In another possible implementation, the dataset status information is carried in MAC-CE signaling. The MAC-CE signaling includes a task identifier field, a dataset size field, a latest data collection time field, an oldest data collection time field, a data collection position field, and a data distribution description field. The task identifier field includes the task identifier. The dataset size field includes the dataset size. The latest data collection time field includes the latest data collection time. The oldest data collection time field includes the oldest data collection time. The data collection position field includes the data collection position. The data distribution description field includes the data distribution description.

In the foregoing method, a field format of the MAC-CE signaling that carries the dataset status information is reflected.

**According to a third aspect,** an embodiment of this application provides a communication apparatus. The communication apparatus includes a module or a unit configured to implement the method described in any one of the first aspect or the possible implementations of the first aspect.

It should be noted that a processor included in the communication apparatus described in the third aspect may be a processor (referred to as a dedicated processor for ease of differentiation) dedicated to performing the method, or may be a processor that invokes a computer program to perform the method, for example, a general-purpose processor. Optionally, at least one processor may alternatively include both the dedicated processor and the general-purpose processor.

Optionally, the computer program may be stored in a memory. For example, the memory may be a non-transitory (non-transitory) memory, for example, a read-only memory (Read-Only Memory, ROM). The memory and the processor may be integrated on a same device, or may be separately disposed on different devices. A type of the memory and a manner of disposing the memory and the processor are not limited in embodiments of this application.

In a possible implementation, at least one memory is located outside the communication apparatus.

In another possible implementation, at least one memory is located inside the communication apparatus.

In another possible implementation, one part of at least one memory are located inside the communication apparatus, and the other part of the at least one memory are located outside the communication apparatus.

In this application, the processor and the memory may alternatively be integrated into one device, that is, the processor and the memory may alternatively be integrated.

**According to a fourth aspect,** an embodiment of this application provides another communication apparatus. The communication apparatus includes a module or a unit configured to implement the method described in any one of the second aspect or the possible implementations of the second aspect.

It should be noted that a processor included in the communication apparatus described in the fourth aspect may be a processor (referred to as a dedicated processor for ease of differentiation) dedicated to performing the method, or may be a processor that invokes a computer program to perform the method, for example, a general-purpose processor. Optionally, at least one processor may alternatively include both the dedicated processor and the general-purpose processor.

Optionally, the computer program may be stored in a memory. For example, the memory may be a non-transitory (non-transitory) memory, for example, a read-only memory (Read-Only Memory, ROM). The memory and the processor may be integrated on a same device, or may be separately disposed on different devices. A type of the memory and a manner of disposing the memory and the processor are not limited in embodiments of this application.

In a possible implementation, at least one memory is located outside the communication apparatus.

In another possible implementation, at least one memory is located inside the communication apparatus.

In another possible implementation, one part of at least one memory are located inside the communication apparatus, and the other part of the at least one memory are located outside the communication apparatus.

In this application, the processor and the memory may alternatively be integrated into one device, that is, the processor and the memory may alternatively be integrated.

**According to a fifth aspect,** an embodiment of this application provides a communication apparatus. The communication apparatus includes a processor. When the processor invokes a computer program or instructions in a memory, the method described in any one of the first aspect or the possible implementations of the first aspect is implemented.

**According to a sixth aspect,** an embodiment of this application provides a communication apparatus. The communication apparatus includes a processor. When the processor invokes a computer program or instructions in a memory, the method described in any one of the second aspect or the possible implementations of the second aspect is implemented.

**According to a seventh aspect,** an embodiment of this application provides a communication apparatus. The communication apparatus includes a logic circuit and an interface. The logic circuit is coupled to the interface. The interface is configured to input and/or output information. The logic circuit is configured to perform the method according to any one of the first aspect, the second aspect, or the possible implementations thereof.

**According to an eighth aspect,** an embodiment of this application provides a communication system. The communication system includes the communication apparatus according to the third aspect and the communication apparatus according to the fourth aspect; or
the communication system includes the communication apparatus according to the fifth aspect and the communication apparatus according to the sixth aspect.

**According to a ninth aspect,** an embodiment of this application provides a computer-readable storage medium. The computer-readable storage medium stores instructions. When the instructions are run on at least one processor, the method described in the first aspect or the second aspect is implemented.

**According to a tenth aspect,** this application provides a computer program product. The computer program product includes computer instructions. When the instructions are run on at least one processor, the method described in the first aspect or the second aspect is implemented. The computer program product may be a software installation package. When the foregoing method needs to be used, the computer program product may be downloaded and executed on a computing device.

For beneficial effect of the technical methods provided in the third aspect to the tenth aspect of this application, refer to the beneficial effect of the technical solutions in the first aspect or the second aspect. Details are not described herein again.

### BRIEF DESCRIPTION OF DRAWINGS

The following briefly describes accompanying drawings used in descriptions of embodiments.
FIG. 1 is a diagram of a system architecture of a communication system 100 according to an embodiment of this application;
FIG. 2 is an interaction diagram of a communication method according to an embodiment of this application;
FIG. 3 is a schematic flowchart of periodically reporting learning-related status information according to an embodiment of this application;
FIG. 4 is a schematic flowchart of reporting learning-related status information based on a trigger according to an embodiment of this application;
FIG. 5 is a diagram of a task identifier according to an embodiment of this application;
FIG. 6 is a diagram of a structure of a communication apparatus 60 according to an embodiment of this application;
FIG. 7 is a diagram of a structure of another communication apparatus 70 according to an embodiment of this application;
FIG. 8 is a diagram of a structure of a communication apparatus 80 according to an embodiment of this application; and
FIG. 9 is a diagram of a structure of another communication apparatus 90 according to an embodiment of this application.

### DESCRIPTION OF EMBODIMENTS

The following describes embodiments of this application with reference to accompanying drawings in embodiments of this application.

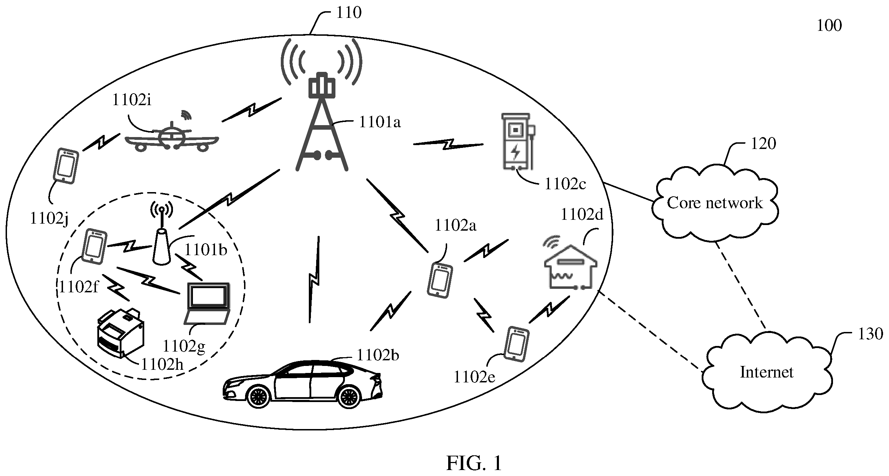

FIG. 1 is a diagram of a system architecture of a communication system 100 according to an embodiment of this application. As shown in FIG. 1, the communication system 100 includes a radio access network (Radio Access Network, RAN) 110, a core network (Core Network, CN) 120, and an internet 130. The RAN 110 includes at least one RAN node (for example, 1101a and 1101b in FIG. 1, which are collectively referred to as 1101) and at least one terminal (for example, 1102a to 1102j in FIG. 1, which are collectively referred to as 1102). The RAN 110 may further include another RAN node, for example, a wireless relay device and/or a wireless backhaul device. The terminal 1102 is connected to the RAN node 1101 in a wireless manner. The RAN node 110 is connected to the core network 120 in a wireless or wired manner. A core network device in the core network 120 and the RAN node 1101 in the RAN 110 may be respectively different physical devices, or may be a same physical device that integrates a core network logical function and a radio access network logical function.

The RAN 110 may be a cellular system related to the 3rd generation partnership project (3rd Generation Partnership Project, 3GPP), for example, a 4G or 5G mobile communication system, or a future-oriented evolved system (for example, a 6G mobile communication system). The RAN 110 may alternatively be an open radio access network (Open RAN, O-RAN or ORAN), or a cloud radio access network (Cloud Radio Access Network, CRAN). The RAN 110 may alternatively be a communication system that integrates two or more of the foregoing systems.

The RAN node 1101 may also be sometimes referred to as an access network device, a RAN entity, an access node, or the like, and forms a part of the communication system, to help the terminal implement radio access. A plurality of RAN nodes 1101 in the communication system 100 may be nodes of a same type, or may be nodes of different types. In some scenarios, roles of the RAN node 1101 and the terminal 1102 are relative. For example, a mobile device 1102i in FIG. 1 may be a helicopter or an uncrewed aerial vehicle, and may be configured as a mobile base station. For the terminal 1102j that accesses the RAN 110 via the mobile device 1102i, the mobile device 1102i is a base station. However, for a base station 1101a, the mobile device 1102i is a terminal. Both the RAN node 1101 and the terminal 1102 are sometimes referred to as communication apparatuses. For example, 1101a and 1101b in FIG. 1 may be understood as communication apparatuses having a base station function, and 1102a to 1102j may be understood as communication apparatuses having a terminal function.

In a possible scenario, the RAN node may be a base station (Base Station), an evolved NodeB (evolved NodeB, eNodeB), an access point (Access Point, AP), a transmission reception point (Transmission Reception Point, TRP), a next generation NodeB (Next Generation NodeB, gNB), a next generation NodeB in a 6th generation (6th Generation, 6G) mobile communication system, a base station in a future mobile communication system, or the like. The RAN node may be a macro base station (for example, 1101a in FIG. 1), a micro base station or an indoor station (for example, 1101b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (Vehicle To Everything, V2X) technology may be a road side unit (Road Side Unit, RSU).

In another possible scenario, a plurality of RAN nodes coordinate to assist the terminal in implementing radio access, and different RAN nodes respectively implement a part of functions of a base station. For example, the RAN node may be a central unit (Central Unit, CU), a distributed unit (Distributed Unit, DU), a CU-control plane (Control Plane, CP), a CU-user plane (User Plane, UP), or a radio unit (Radio Unit, RU). The CU and the DU may be separately arranged, or may be included in a same network element, for example, a base band unit (Base Band Unit, BBU). The RU may be included in a radio frequency device or a radio frequency unit, for example, included in a remote radio unit (Remote Radio Unit, RRU), an active antenna unit (Active Antenna Unit, AAU), or a remote radio head (Remote Radio Head, RRH).

In different systems, the CU (or the CU-CP and the CU-UP), the DU, or the RU may alternatively have different names, but persons skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The terminal may also be referred to as a terminal device, user equipment (User Equipment, UE), a mobile station, a mobile terminal, or the like. The terminal may be widely used in various scenarios, for example, device-to-device (Device-to-device, D2D), vehicle to everything (Vehicle To Everything, V2X) communication, machine-type communication (Machine-type Communication, MTC), an internet of things (Internet Of Things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

In embodiments of this application, a network device mentioned subsequently may be the RAN node 1101, or may be the core network 120, or may be the mobile device 1102i. This is not excessively limited in this application. The terminal dynamically sends learning-related status information associated with an AI task to the network device, to support the network device in performing operations such as lifecycle management and learning strategy adjustment on a model associated with the AI task.

Before the solutions in this application are described, the following several descriptions are provided.
(1) In this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are manners of indicating the to-be-indicated information. For example, the manners include but are not limited to a manner in which the to-be-indicated information, for example, the to-be-indicated information or an index of the to-be-indicated information, may be directly indicated. The to-be-indicated information may alternatively be indirectly indicated by indicating other information, where there is an association relationship between the other information and the to-be-indicated information. Alternatively, only one part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

(2) In this application, "sending" and "receiving" indicate signal transmission directions. For example, "sending information to XX" may be understood as that a destination end of the information is XX, and may include direct sending through an air interface, or include indirect sending by another unit or module through an air interface. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface. In other words, sending and receiving may be performed between devices, for example, between a network device and a terminal device; or may be performed inside a device, for example, sending or receiving between components, modules, chips, software modules, or hardware modules inside the device through a bus, a trace, or an interface.

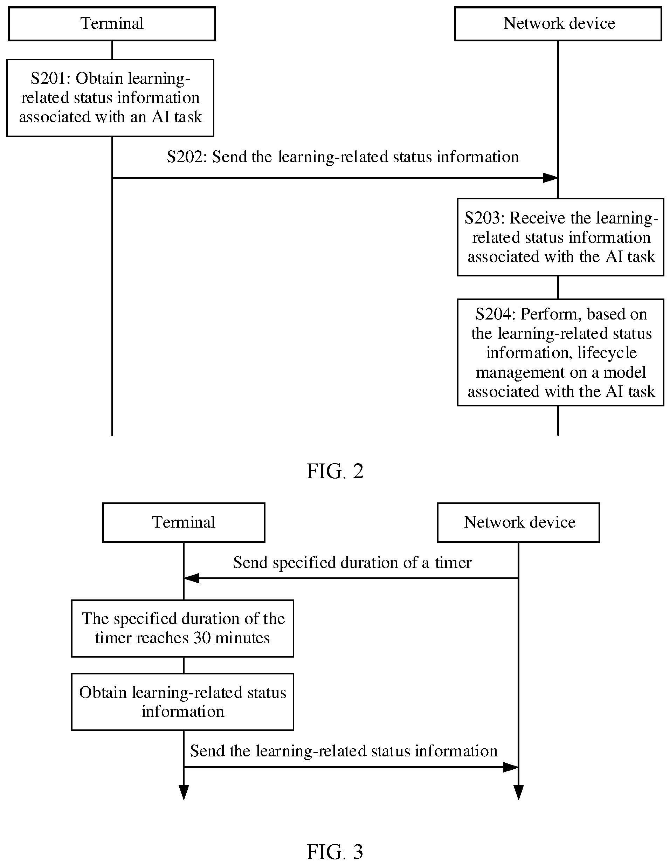

FIG. 2 is an interaction diagram of a communication method according to an embodiment of this application. The communication method is described from a perspective of interaction between a terminal and a network device. Optionally, the communication method may be applied to the foregoing system, for example, the communication system shown in FIG. 1.

The communication method includes but is not limited to the following steps S201 to S204. It should be understood that, herein, for ease of description, a sequence of step S201 to step S204 is used for description, but this is not intended to limit execution necessarily in the foregoing sequence. An execution sequence, execution time, a quantity of execution times, and the like of the foregoing one or more steps are not limited in embodiments of this application. Another step may alternatively be interpolated between, before or after these steps as required. Step S201 to step S204 are specifically as follows.

**Step S201:** The terminal obtains learning-related status information associated with an AI task.

The learning-related status information includes one or more of resource status information, environment status information, model performance information, and dataset status information. The learning-related status information is used by the network device to perform lifecycle management on a model associated with the AI task (where a plurality of models may be deployed for one AI task, and the network device may perform lifecycle management on a part or all of the models).

In this embodiment of this application, before obtaining the learning-related status information of the associated AI task, the terminal may obtain, by receiving indication information sent by the network device, a manner of sending the learning-related status information (for example, a condition for sending the learning-related status information). Therefore, optionally, that the terminal obtains the manner of sending the learning-related status information of the associated AI task is specifically as follows.

Manner 1: The indication information includes reference time; and when the reference time is met, the terminal sends the learning-related status information to the network device.

Specifically, FIG. 3 is a schematic flowchart of periodically reporting the learning-related status information according to an embodiment of this application. As shown in FIG. 3, for example, the reference time is 30 minutes. The network device may send specified duration of a timer to the terminal. Then, the terminal starts the timer for timing. When the specified duration of the timer reaches 30 minutes, the terminal obtains the learning-related status information of the associated AI task, and then sends the learning-related status information to the network device.

Manner 2: The indication information includes a trigger condition; and when the trigger condition is met, the terminal sends the learning-related status information to the network device.

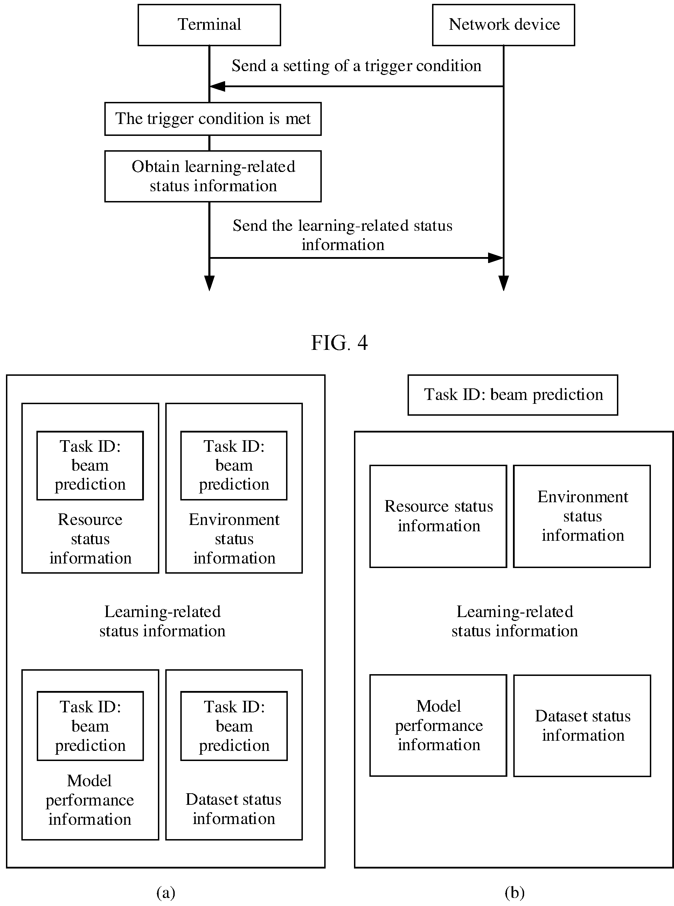

Specifically, FIG. 4 is a schematic flowchart of reporting the learning-related status information based on a trigger according to an embodiment of this application. As shown in FIG. 4, for example, the trigger condition may be that inference accuracy of the model is less than a preset threshold. If the associated AI task is "beam prediction", and the inference accuracy of the model associated with the task is 80%, and is less than a preset threshold 90%, the trigger condition for reporting the learning-related status information is met. In this case, the terminal may obtain the learning-related status information of the associated AI task, and then send the learning-related status information to the network device.

Optionally, the terminal sends indication information of a task identifier to the network device.

The indication information of the task identifier indicates the associated AI task. The task identifier may be carried in the learning-related status information, or may exist independently without being carried in the learning-related status information. This is not limited in this application. For example, FIG. 5 is a diagram of the task identifier according to an embodiment of this application. As shown in FIG. 5, if the associated AI task is "beam prediction", (a) in FIG. 5 shows that the task identifier is carried in the learning-related status information, that is, each piece of signaling carried in the resource status information, the environment status information, the model performance information, and the dataset status information includes the task identifier, and (b) in FIG. 5 shows that the task identifier is not carried in the learning-related status information and is a general task identifier that exists independently. For ease of description of subsequent embodiments, in this application, a case in which the task identifier is carried in the learning-related status information is used as an example for description. Details are not described again subsequently.

It should be noted that both information about the specified duration of the timer and information about the trigger condition that are sent by the network device carry information about the task identifier, so that the terminal can learn of a specific associated task that the current timer and the trigger condition are set for. Correspondingly, the terminal also needs to carry the task identifier in the fed back learning-related status information, to indicate an associated task for which the reported learning-related status information is obtained.

The following separately describes in detail a signaling reporting design of each piece of information in the learning-related status information.

In an example design, the resource status information includes a resource headroom. The resource headroom includes a computing power headroom and/or a storage headroom. For example, the resource headroom is the computing power headroom. If the resource status information is carried in medium access control control element MAC-CE signaling, the MAC-CE signaling includes a task identifier field (namely, a "TaskID" field in Table 1) and a CPH field (namely, a "CPH" field in Table 1). The task identifier field includes the task identifier. The CPH field includes the resource headroom.

Optionally, an "R" field includes a MAC-CE reserved bit.

A "G" field indicates that a common learning-related status or a specific task learning-related status is reported. For example, if the "G" field is " 1", it indicates that the common learning-related status is reported in the signaling; or if the "G" field is "0", it indicates that the specific task learning-related status is reported in the signaling.

The foregoing fields are specifically shown in Table 1.

**Table 1**

| R | G | TaskID |
|---|---|---|
| CPH | | |
| Others | | |

Optionally, the terminal sends first indication information to the network device.

The first indication information indicates that the learning-related status information is from a first-type AI task or a second-type AI task. The first-type AI task includes one or more preset tasks. The second-type AI task includes one or more AI tasks other than the first-type AI task. It should be noted that the first-type AI task may include a specific task corresponding to the specific task learning-related status in the foregoing "G" field, and the second-type AI task may include another task corresponding to the common learning-related status in the foregoing "G" field. For example, the first-type task may be one or more tasks preset in a standard or a system, for example, one or more of CSI compression feedback, beam prediction, positioning enhancement, and transceiver data transmission. However, a user using a communication system may subsequently use the second-type AI task. AI tasks of this type on each terminal or network device or in each area are different. Therefore, a general learning-related status, namely, the common learning-related status mentioned in Table 1, is set for the second-type task, to improve reporting efficiency of the learning-related status information and reduce resources.

Further, optionally, the first indication information is a task identifier.

In other words, the foregoing "G" field may reuse the "TaskID" field, as shown in Table 1; or the foregoing "G" field may separately indicate the associated AI task, as shown in Table 2.

**Table 2**

| R | G |
|---|---|
| CPH | |
| Others | |

In addition, it should be noted that a headroom is a resource that is currently idle in space. For example, if a total storage capacity of the computing power headroom is 100 G, and an existing AI task has occupied 60 G, remaining 40 G is a headroom. The resource headroom may be indicated by a level index. To be specific, a resource headroom value is divided into a plurality of levels, and an index is defined for each level. For example, if the resource headroom value is N, and is equally divided into levels 0, 1, 2, ..., and N, corresponding level indexes CPHLevel are respectively Headroom_0, Headroom_1, Headroom_2, ..., and HeadrooM_N, as shown in Table 3.

**Table 3**

| CPH | CPHLevel |
|---|---|
| 0 | Headroom_0 |
| 1 | Headroom_1 |
| 2 | Headroom_2 |
| ... | ... |
| N | Headroom_N |

When resource status information of a plurality of tasks needs to be reported, the resource status information includes a plurality of task identifiers and a plurality of resource headrooms. Each of the plurality of task identifiers represents an AI task associated with one of the plurality of resource headrooms (it should be noted that the plurality of task identifiers herein correspond to the plurality of tasks, which are different from the associated AI task in step S201, where the associated AI task in step S201 may be one or more tasks, and the plurality of tasks herein mean only that the resource status information of the plurality of tasks needs to be reported; explanations in subsequent embodiments are the same as the explanation herein; and therefore, details are not described again). For example, the following signaling may be used, as shown in Table 4.

**Table 4**

| R | C₁ | | C₂ | C₃ | | C₄ | C₅ | C₆ | C₇ |
|---|---|---|---|---|---|---|---|---|---|
| R | G | | Task ID1 | | | | | | |
| CPH1 | | | | | | | | | |
| Others | | | | | | | | | |
| ... | | | | | | | | | |
| R | | G | | | Task ID7 | | | | |
| CPH7 | | | | | | | | | |
| Others | | | | | | | | | |

Optionally, a "Cₙ" field indicates whether learning-related status information related to a task N appears in the signaling. For example, if C₁ is 1, it indicates that a parameter related to Task ID1 appears in the signaling; or if C₁ is 0, it indicates that the parameter related to Task ID1 appears in the signaling. This is not excessively limited in embodiments of this application. For other fields, refer to the foregoing corresponding explanations of the fields in Table 1. Details are not described herein again.

In an example design, the environment status information includes first parameter information. The first parameter information includes one or more of a system parameter, a scenario type, and a model identifier. For example, the environment status information is carried in MAC-CE signaling. The MAC-CE signaling includes a task identifier field (namely, a "TaskID" field in Table 5), a system parameter field (namely, a "Systemparameter" field in Table 5), a scenario type field (namely, a "Scenariotype" field in Table 5), and a model identifier field (namely, a "Pairingcondition" field in Table 5). The task identifier field includes a task identifier. The system parameter field includes the system parameter. The scenario type field includes the scenario type. The model identifier field includes the model identifier.

Details are shown in Table 5.

**Table 5**

| R | TaskID |
|---|---|
| Systemparameter | |
| Scenariotype | |
| Pairingcondition | |
| Others | |

Optionally, an "R" field includes a MAC-CE reserved bit.

The "Systemparameter" field includes a parameter configuration associated with the task or a change of the system parameter. A related system parameter also varies with different tasks. Four tasks, namely, channel state information (Channel State Information, CSI) compression feedback, beam prediction, positioning enhancement, and transceiver data transmission in the first-type task, are used as examples. Possible related system parameters of the foregoing tasks are shown in Table 6.

**Table 6**

| Task name | System parameter |
|---|---|
| CSI compression feedback | An antenna configuration (a quantity of antenna panels, a quantity of antenna elements, and an antenna direction configuration), an antenna port configuration, a quantity of ranks (ranks), and the like |
| Beam prediction | A quantity of transmit beams, a quantity of receive beams, a beam measurement configuration (a quantity of measured beam pairs and a measurement interval), a prediction interval, and the like |
| Positioning enhancement | An antenna configuration (a quantity of antenna panels, a quantity of antenna elements, and an antenna direction configuration), a reference signal configuration (reference signal density, a resource mapping method, and the like), and the like |
| Transceiver data transmission | A system numerology (a subcarrier spacing, a frame structure, a system bandwidth, and the like), a signal processing configuration (a modulation order, a coding rate, a waveform, precoding, a resource mapping manner, a multi-antenna configuration, and the like), and the like |

The "Scenariotype" field includes a scenario in which the task is executed. The scenario type includes one or more of an indoor or outdoor area, an urban or suburban area, and line-of-sight LOS transmission or non-line-of-sight NLOS transmission of a radio signal. For example, the scenario in which the task is executed may be switched from the indoor area in the urban area to the outdoor area in the suburban area, or may be switched from outdoor area to the indoor area. This is not excessively limited in this application.

The "Pairingcondition" field includes a model identifier of a model that is used for executing the task and that matches a communication peer end. For example, the model identifier is used to make models, used by the terminal and the network device to associate with the "CSI compression feedback" task, consistent, so that the model can be normally used to collect environment status information corresponding to the model associated with the "CSI compression feedback" task.

When environment status information of a plurality of tasks needs to be reported, the environment status information includes a plurality of task identifiers and a plurality of pieces of first parameter information. Each of the plurality of task identifiers represents an AI task associated with one of the plurality of pieces of first parameter information. For example, the following signaling may be used, as shown in Table 7.

**Table 7**

| R | C₁ | C₂ | | C₃ | C₄ | C₅ | C₆ | C₇ |
|---|---|---|---|---|---|---|---|---|
| R | Task ID1 | | | | | | | |
| Systemparameter | | | | | | | | |
| Scenariotype | | | | | | | | |
| Pairingcondition | | | | | | | | |
| Others | | | | | | | | |
| ... | | | | | | | | |
| R | | | Task ID7 | | | | | |
| Systemparameter | | | | | | | | |
| Scenariotype | | | | | | | | |
| Pairingcondition | | | | | | | | |
| Others | | | | | | | | |

In an example design, the model performance information includes second parameter information. The second parameter information includes one or more of a model identifier, model performance, fallback performance, and a fallback indication.

The model performance represents performance of a model used for the associated AI task. The fallback performance represents system performance after the associated AI task falls back from model execution to non-model execution. The fallback indication represents whether fallback needs to be performed on the associated AI task. For example, if the field is "1", it indicates that fallback needs to be performed on the associated AI task, or if the field is "0", it indicates that the associated AI task does not need to fall back. The model identifier includes a model identifier of one or more models in the model associated with the AI task.

For example, the model performance information is carried in MAC-CE signaling. The MAC-CE signaling includes a task identifier field (namely, a "Task ID" field in Table 8), a model identifier field (namely, a "ModelID" field in Table 8), a model performance field (namely, a "Modelperformance" field in Table 8), a fallback performance field (namely, a "Fallback performance" field in Table 8), and a fallback indication field (namely, an "F" field in Table 8). The task identifier field includes a task identifier. The model identifier field includes the model identifier. The model performance field includes the model performance. The fallback performance field includes the fallback performance. The fallback indication field includes the fallback indication.

Details are shown in Table 8.

**Table 8**

| R | F | M₁ | M₂ | M₃ | M₄ | M₅ | M₆ |
|---|---|---|---|---|---|---|---|
| Task ID | | | | | | | |
| ModelID1 | | | Modelperformance | | | | |
| ModelID2 | | | Modelperformance | | | | |
| ... | | | | | | | |
| Fallback performance | | | | | | | |
| Others | | | | | | | |

Optionally, an "R" field includes a MAC-CE reserved bit.

An "Mₙ" field indicates whether performance of an N^{th} model that completes a specific task appears in the signaling. For example, if M₁ is 1, it indicates that performance of a 1^{st} model that completes the specific task "CSI compression feedback" appears in the signaling; or if M₁ is 0, it indicates that the performance of the 1^{st} model that completes the specific task "CSI compression feedback" appears in the signaling. This is not excessively limited in embodiments of this application. For other fields, refer to the foregoing corresponding explanations of the fields in Table 8. Details are not described herein again.

When model performance information of a plurality of tasks needs to be reported, the model performance information includes a plurality of task identifiers and a plurality of pieces of second parameter information. Each of the plurality of task identifiers represents an AI task associated with one of the plurality of pieces of second parameter information, as shown in Table 9.

**Table 9**

| R | C₁ | | C₂ | | C₃ | | C₄ | | C₅ | C₆ | C₇ |
|---|---|---|---|---|---|---|---|---|---|---|---|
| | | | | | | | | | | | |

| Task ID | | | | | | | | | | | |
|---|---|---|---|---|---|---|---|---|---|---|---|
| ModelID1 | | | | | Model performance | | | | | | |
| ModelID2 | | | | | Model performance | | | | | | |
| ... | | | | | | | | | | | |
| Fallback performance | | | | | | | | | | | |
| Others | | | | | | | | | | | |
| ... | | | | | | | | | | | |

| R | F | M₁ | | M₂ | | M₃ | | M₄ | | M₅ | M₆ |
|---|---|---|---|---|---|---|---|---|---|---|---|
| Task ID | | | | | | | | | | | |
| ModelID1 | | | | Model performance | | | | | | | |
| ModelID2 | | | | Model performance | | | | | | | |
| ... | | | | | | | | | | | |
| Fallback performance | | | | | | | | | | | |
| Others | | | | | | | | | | | |

In an example design, the dataset status information includes third parameter information. The third parameter information includes one or more of a dataset size, data collection time, a data collection position, and a data distribution description.

The data collection time includes collection time of a latest data sample in a dataset collected for the associated AI task and collection time of an oldest data sample in the dataset. The dataset size represents a quantity of data samples in the dataset collected for the associated AI task. The data collection position represents a position of data in the dataset collected for the associated AI task. The data distribution description represents distribution of the data in the dataset collected for the associated AI task.

For example, the dataset status information is carried in MAC-CE signaling. The MAC-CE signaling includes a task identifier field (namely, a "TaskID" field in Table 10), a dataset size field (namely, a "DatasetSize" field in Table 10), a latest data collection time field (namely, a "Latestdatatimestamp" field in Table 10), an oldest data collection time field (namely, an "Oldest data time stamp" field in Table 10), a data collection position field (namely, a "Collectionposition" field in Table 10), and a data distribution description field (namely, a "Distributiondescription" field in Table 10). The task identifier field includes a task identifier. The dataset size field includes the dataset size. The latest data collection time field includes the latest data collection time. The oldest data collection time field includes the oldest data collection time. The data collection position field includes the data collection position. The data distribution description field includes the data distribution description.

Details are shown in Table 10.

**Table 10**

| R | TaskID |
|---|---|
| DatasetSize | |
| Latestdatatimestamp | |
| Oldest data time stamp | |
| Collectionposition | |
| Distributiondescription | |

Optionally, an "R" field includes a MAC-CE reserved bit.

When dataset status information of a plurality of tasks needs to be reported, the dataset status information includes a plurality of task identifiers and a plurality of pieces of third parameter information. Each of the plurality of task identifiers represents an AI task associated with one of the plurality of pieces of third parameter information. For example, the following signaling may be used, as shown in Table 11.

**Table 11**

| R | C₁ | C₂ | | C3 | C₄ | C₅ | C₆ | C₇ |
|---|---|---|---|---|---|---|---|---|
| R | TaskID | | | | | | | |
| DatasetSize | | | | | | | | |
| Latestdatatimestamp | | | | | | | | |
| Oldest data time stamp | | | | | | | | |
| Collectionposition | | | | | | | | |
| Distributiondescription | | | | | | | | |
| ... | | | | | | | | |
| R | | | TaskID | | | | | |
| DatasetSize | | | | | | | | |
| Latestdatatimestamp | | | | | | | | |
| Oldest data time stamp | | | | | | | | |
| Collectionposition | | | | | | | | |
| Distributiondescription | | | | | | | | |

**Step S202:** The terminal sends the learning-related status information to the network device.

**Step S203:** The network device receives the learning-related status information of the associated AI task sent by the terminal.

**Step S204:** The network device performs, based on the learning-related status information, lifecycle management on the model associated with the AI task.

Lifecycle management includes one or more of model selection, model training, model inference, model transfer, model enabling, model switching, model fallback, model monitoring, and the like. Specifically, the network device performs, based on the learning-related status information reported by the terminal, related management on the model associated with the AI task. For example, if the learning-related status reported by the terminal reflects that performance of the model associated with the AI task deteriorates, the network device may send a new model to the terminal, or when a plurality of models have been deployed on the terminal, the network device may indicate the terminal to switch from the model whose performance currently deteriorates to another model. In a worst case, an entire AI method is not appropriate, and the entire AI method may fall back to a traditional method. All the models associated with the AI task are considered globally through the foregoing operations. In this embodiment of this application, operations such as reporting of the learning-related status information can be performed for the specific task, to improve efficiency and accuracy of performing lifecycle management on the model associated with the AI task.

The foregoing describes in detail the method in embodiments of this application. The following provides apparatuses in embodiments of this application.

It may be understood that, to implement functions in the foregoing method embodiments, a plurality of apparatuses provided in embodiments of this application, for example, a communication apparatus, include a corresponding hardware structure, software module, or a combination of the hardware structure and a software structure for performing the functions.

Persons skilled in the art should be easily aware that, in combination with units and algorithm steps of the examples described in embodiments disclosed in this specification, embodiments of this application can be implemented by hardware or a combination of the hardware and computer software. Whether a function is performed by hardware or hardware driven by computer software depends on particular applications and design constraints of the technical solutions. Persons skilled in the art may implement the foregoing method embodiments by using different apparatus implementations in different use scenarios. It should not be considered that different implementations of the apparatus go beyond the scope of embodiments of this application.

In embodiments of this application, the apparatus may be divided into functional modules. For example, each functional module may be obtained through division based on each corresponding function, or two or more functions may be integrated into one functional module. The integrated module may be implemented in a form of hardware, or may be implemented in a form of a software functional module. It should be noted that, in embodiments of this application, division into the modules is an example, is merely logical function division, and may be other division during actual implementation.

For example, when each functional module of the apparatus is obtained through division in an integrated manner, several possible communication apparatuses are provided as examples in this application.

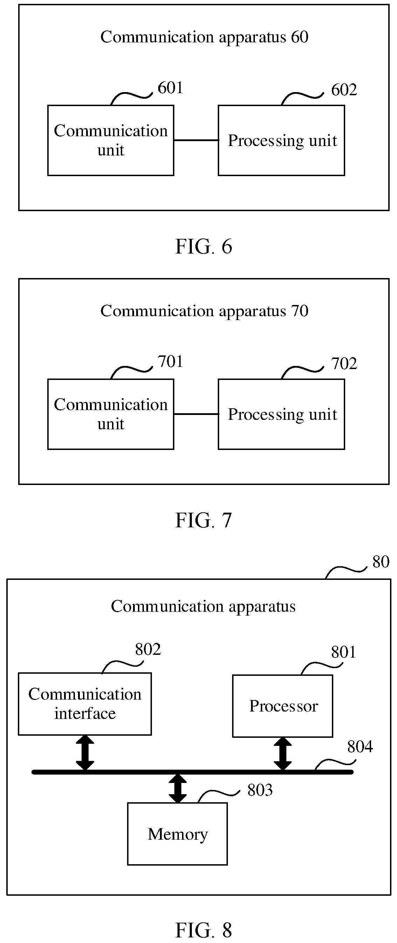

FIG. 6 is a diagram of a structure of a communication apparatus 60 according to an embodiment of this application. The communication apparatus 60 may be the terminal shown in FIG. 1 or a device in the terminal, for example, a chip, a software module, or an integrated circuit. The communication apparatus 60 includes a communication unit 601 and a processing unit 602.

The communication unit 601 is a general term of devices that can establish a communication connection and receive/send data in this embodiment of this application. The communication apparatus 60 may alternatively be another communication unit. For example, the communication unit 601 may be an input/output interface, or may be referred to as a communication interface, an interface circuit, or an interface. Alternatively, the communication unit 601 may be a sending unit and a receiving unit. The sending unit may be an output interface, and the receiving unit may be an input interface. The sending unit and the receiving unit are integrated into one unit, for example, an input/output interface. The communication apparatus 60 is configured to implement the foregoing communication method in the method embodiments of this application, for example, the communication method in FIG. 2.

The processing unit 602 may be one or more logic circuits. To be specific, the processing unit 602 may be implemented by using the logic circuit, and the communication unit 601 may be implemented by using an interface. The logic circuit may be a chip, a processing circuit, an integrated circuit, a system on chip (System on Chip, SoC), or the like. The interface may be a communication interface, an input/output interface, a pin, or the like.

In this embodiment of this application, the logic circuit and the interface may be further coupled to each other. A specific manner of a connection between the logic circuit and the interface is not limited in embodiments of this application. For example, the logic circuit may be configured to perform a function or a step implemented by the processing unit 602, and the interface may be configured to perform a function or a step implemented by the communication unit 601.

The communication apparatus 60 has functions of implementing the terminal described in embodiments of this application. For example, the communication apparatus 60 includes a module, a unit, or a means (means) corresponding to a terminal performing the steps related to the terminal described in embodiments of this application. The function, the unit, or the means (means) may be implemented by software or hardware, or may be implemented by hardware executing corresponding software, or may be implemented by a combination of software and hardware. For details, further refer to corresponding descriptions in the foregoing corresponding method embodiments.

In a possible design, the processing unit 602 is configured to obtain learning-related status information associated with an artificial intelligence AI task, where the learning-related status information includes one or more of resource status information, environment status information, model performance information, and dataset status information.

The communication unit 601 is configured to send the learning-related status information, where the learning-related status information is used to perform lifecycle management on a model associated with the AI task.

In an optional implementation, the communication unit 601 is further configured to:
receive indication information, where the indication information indicates a manner of sending the learning-related status information.

In another optional implementation, the indication information includes reference time.

In terms of sending the learning-related status information, the communication unit 601 is further configured to:
send the learning-related status information when the reference time is met.

In another optional implementation, the indication information includes a trigger condition.

In terms of sending the learning-related status information, the communication unit 601 is further configured to:
send the learning-related status information when the trigger condition is met.

In another optional implementation, the communication unit 601 is further configured to:
send indication information of a task identifier, where the indication information of the task identifier indicates the associated AI task.

In another optional implementation, the resource status information includes a resource headroom. The resource headroom includes a computing power headroom and/or a storage headroom.

In another optional implementation, the resource status information includes a plurality of task identifiers and a plurality of resource headrooms. Each of the plurality of task identifiers represents an AI task associated with one of the plurality of resource headrooms.

In another optional implementation, the resource status information is carried in medium access control control element MAC-CE signaling. The MAC-CE signaling includes a task identifier field and a resource headroom CPH field. The task identifier field includes the task identifier. The CPH field includes the resource headroom.

In another optional implementation, the communication unit 601 is further configured to:
send first indication information, where the first indication information indicates that the learning-related status information is from a first-type AI task or a second-type AI task, the first-type AI task includes one or more preset tasks, and the second-type AI task includes one or more AI tasks other than the first-type AI task.

In another optional implementation, the first indication information is a task identifier.

In another optional implementation, the environment status information includes first parameter information. The first parameter information includes one or more of a system parameter, a scenario type, and a model identifier.

In another optional implementation, the environment status information includes a plurality of task identifiers and a plurality of pieces of first parameter information. Each of the plurality of task identifiers represents an AI task associated with one of the plurality of pieces of first parameter information.

In another optional implementation, the environment status information is carried in MAC-CE signaling. The MAC-CE signaling includes a task identifier field, a system parameter field, a scenario type field, and a model identifier field. The task identifier field includes the task identifier. The system parameter field includes the system parameter. The scenario type field includes the scenario type. The model identifier field includes the model identifier.

In another optional implementation, the model performance information includes second parameter information. The second parameter information includes one or more of a model identifier, model performance, fallback performance, and a fallback indication. The model performance represents performance of a model used for the associated AI task. The fallback performance represents system performance after the associated AI task falls back from model execution to non-model execution. The fallback indication represents whether fallback needs to be performed on the associated AI task. The model identifier includes a model identifier of one or more models in the model associated with the AI task.

In another optional implementation, the model performance information includes a plurality of task identifiers and a plurality of pieces of second parameter information. Each of the plurality of task identifiers represents an AI task associated with one of the plurality of pieces of second parameter information.

In another optional implementation, the model performance information is carried in MAC-CE signaling. The MAC-CE signaling includes a task identifier field, a model identifier field, a model performance field, a fallback performance field, and a fallback indication field. The task identifier field includes the task identifier. The model identifier field includes the model identifier. The model performance field includes the model performance. The fallback performance field includes the fallback performance. The fallback indication field includes the fallback indication.

In another optional implementation, the dataset status information includes third parameter information. The third parameter information includes one or more of a dataset size, data collection time, a data collection position, and a data distribution description. The data collection time includes collection time of a latest data sample in a dataset collected for the associated AI task and collection time of an oldest data sample in the dataset. The dataset size represents a quantity of data samples in the dataset collected for the associated AI task. The data collection position represents a position of data in the dataset collected for the associated AI task. The data distribution description represents distribution of the data in the dataset collected for the associated AI task.

In another optional implementation, the dataset status information includes a plurality of task identifiers and a plurality of pieces of third parameter information. Each of the plurality of task identifiers represents an AI task associated with one of the plurality of pieces of third parameter information.

In another optional implementation, the dataset status information is carried in MAC-CE signaling. The MAC-CE signaling includes a task identifier field, a dataset size field, a latest data collection time field, an oldest data collection time field, a data collection position field, and a data distribution description field. The task identifier field includes the task identifier. The dataset size field includes the dataset size. The latest data collection time field includes the latest data collection time. The oldest data collection time field includes the oldest data collection time. The data collection position field includes the data collection position. The data distribution description field includes the data distribution description.

This embodiment of this application and the foregoing method embodiments are based on a same concept, and bring same technical effect. For a specific principle, refer to the descriptions of the foregoing embodiments. Details are not described again.

FIG. 7 is a diagram of a structure of another communication apparatus 70 according to an embodiment of this application. The communication apparatus 70 may be the network device shown in FIG. 1 or a device in the network device, for example, a chip, a software module, or an integrated circuit. The communication apparatus 70 includes a communication unit 701 and a processing unit 702.

The communication unit 701 is a general term of devices that can establish a communication connection and receive/send data in this embodiment of this application. The communication apparatus 70 may alternatively be another communication unit. For example, the communication unit 701 may be an input/output interface, or may be referred to as a communication interface, an interface circuit, or an interface. Alternatively, the communication unit 701 may be a sending unit and a receiving unit. The sending unit may be an output interface, and the receiving unit may be an input interface. The sending unit and the receiving unit are integrated into one unit, for example, an input/output interface. The communication apparatus 70 is configured to implement the foregoing communication method in the method embodiments of this application, for example, the communication method in FIG. 2.

The processing unit 702 may be one or more logic circuits. To be specific, the processing unit 702 may be implemented by using the logic circuit, and the communication unit 701 may be implemented by using an interface. The logic circuit may be a chip, a processing circuit, an integrated circuit, a system on chip (System on Chip, SoC), or the like. The interface may be a communication interface, an input/output interface, a pin, or the like.

In this embodiment of this application, the logic circuit and the interface may be further coupled to each other. A specific manner of a connection between the logic circuit and the interface is not limited in embodiments of this application. For example, the logic circuit may be configured to perform a function or a step implemented by the processing unit 702, and the interface may be configured to perform a function or a step implemented by the communication unit 701.

The communication apparatus 70 has functions of implementing the terminal described in embodiments of this application. For example, the communication apparatus 70 includes a module, a unit, or a means (means) corresponding to a terminal performing the steps related to the terminal described in embodiments of this application. The function, the unit, or the means (means) may be implemented by software or hardware, or may be implemented by hardware executing corresponding software, or may be implemented by a combination of software and hardware. For details, further refer to corresponding descriptions in the foregoing corresponding method embodiments.

In a possible design, the communication unit 701 is configured to receive learning-related status information associated with an AI task, where the learning-related status information includes one or more of resource status information, environment status information, model performance information, and dataset status information.

The processing unit 702 is configured to perform, based on the learning-related status information, lifecycle management on a model associated with the AI task.

In an optional implementation, the communication unit 701 is further configured to:
send indication information, where the indication information indicates a manner of sending the learning-related status information.

In another optional implementation, the indication information includes reference time. The indication information indicates to send the learning-related status information when the reference time is met.

In another optional implementation, the indication information includes a trigger condition. The indication information indicates to send the learning-related status information when the trigger condition is met.

In another optional implementation, the communication unit 701 is further configured to:
receive indication information of a task identifier, where the indication information of the task identifier indicates the associated AI task.

In another optional implementation, the resource status information includes a resource headroom. The resource headroom includes a computing power headroom and/or a storage headroom.

In another optional implementation, the resource status information includes a plurality of task identifiers and a plurality of resource headrooms. Each of the plurality of task identifiers represents an AI task associated with one of the plurality of resource headrooms.

In another optional implementation, the resource status information is carried in MAC-CE signaling. The MAC-CE signaling includes a task identifier field and a CPH field. The task identifier field includes the task identifier. The CPH field includes the resource headroom.

In another optional implementation, the communication unit 701 is further configured to:
receive first indication information, where the first indication information indicates that the learning-related status information is from a first-type AI task or a second-type AI task, the first-type AI task includes one or more preset tasks, and the second-type AI task includes one or more AI tasks other than the first-type AI task.

In another optional implementation, the first indication information is a task identifier.

In another optional implementation, the environment status information includes first parameter information. The first parameter information includes one or more of a system parameter, a scenario type, and a model identifier.

In another optional implementation, the environment status information includes a plurality of task identifiers and a plurality of pieces of first parameter information. Each of the plurality of task identifiers represents an AI task associated with one of the plurality of pieces of first parameter information.

In another optional implementation, the environment status information is carried in MAC-CE signaling. The MAC-CE signaling includes a task identifier field, a system parameter field, a scenario type field, and a model identifier field. The task identifier field includes the task identifier. The system parameter field includes the system parameter. The scenario type field includes the scenario type. The model identifier field includes the model identifier.

In another optional implementation, the model performance information includes second parameter information. The second parameter information includes one or more of a model identifier, model performance, fallback performance, and a fallback indication. The model performance represents performance of a model used for the associated AI task. The fallback performance represents system performance after the associated AI task falls back from model execution to non-model execution. The fallback indication represents whether fallback needs to be performed on the associated AI task. The model identifier includes a model identifier of one or more models in the model associated with the AI task.

In another optional implementation, the model performance information includes a plurality of task identifiers and a plurality of pieces of second parameter information. Each of the plurality of task identifiers represents an AI task associated with one of the plurality of pieces of second parameter information.

In another optional implementation, the model performance information is carried in MAC-CE signaling. The MAC-CE signaling includes a task identifier field, a model identifier field, a model performance field, a fallback performance field, and a fallback indication field. The task identifier field includes the task identifier. The model identifier field includes the model identifier. The model performance field includes the model performance. The fallback performance field includes the fallback performance. The fallback indication field includes the fallback indication.

In another optional implementation, the dataset status information includes third parameter information. The third parameter information includes one or more of a dataset size, data collection time, a data collection position, and a data distribution description. The data collection time includes collection time of a latest data sample in a dataset collected for the associated AI task and collection time of an oldest data sample in the dataset. The dataset size represents a quantity of data samples in the dataset collected for the associated AI task. The data collection position represents a position of data in the dataset collected for the associated AI task. The data distribution description represents distribution of the data in the dataset collected for the associated AI task.

In another optional implementation, the dataset status information includes a plurality of task identifiers and a plurality of pieces of third parameter information. Each of the plurality of task identifiers represents an AI task associated with one of the plurality of pieces of third parameter information.

In another optional implementation, the dataset status information is carried in MAC-CE signaling. The MAC-CE signaling includes a task identifier field, a dataset size field, a latest data collection time field, an oldest data collection time field, a data collection position field, and a data distribution description field. The task identifier field includes the task identifier. The dataset size field includes the dataset size. The latest data collection time field includes the latest data collection time. The oldest data collection time field includes the oldest data collection time. The data collection position field includes the data collection position. The data distribution description field includes the data distribution description.

This embodiment of this application and the foregoing method embodiments are based on a same concept, and bring same technical effect. For a specific principle, refer to the descriptions of the foregoing embodiments. Details are not described again.

In embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

FIG. 8 is a diagram of a structure of a communication apparatus 80 according to an embodiment of this application. The communication apparatus 80 may be a terminal, or may be a component (for example, a chip, a software module, or a hardware module) in the terminal. The communication apparatus 80 may include at least one processor 801. Optionally, the communication apparatus 80 may further include a communication interface 802. Further, optionally, the communication apparatus 80 may further include at least one memory 803. Further, optionally, the communication apparatus 80 may further include a bus 804. The processor 801, the communication interface 802, and the memory 803 are connected to each other through the bus 804.

Optionally, the processor 801 may be a processor (referred to as a dedicated processor for ease of differentiation) dedicated to performing the method, or may be a processor that invokes a computer program to perform the method, for example, a general-purpose processor. Optionally, the at least one processor may alternatively include both the dedicated processor and the general-purpose processor. Optionally, when the communication apparatus 80 includes the at least one processor 801, the computer program may be stored in the memory 803.

The communication interface 802 may be configured to provide an information input or output for the at least one processor, and/or the communication interface 802 may be further configured to receive data sent from the outside and/or send data to the outside, and may be a wired link interface including, for example, an ethernet cable, or may be a wireless link (wireless fidelity (wireless fidelity, Wi-Fi), Bluetooth, universal wireless transmission, an in-vehicle short-range communication technology, another short-range wireless transmission technology, or the like) interface. Optionally, the communication interface 802 may further include a transmitter (for example, a radio frequency transmitter or an antenna), a receiver, or the like coupled to the interface.

The memory 803 is configured to provide storage space, and the storage space may store data such as an operating system and a computer program. The memory 803 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like.

The at least one processor 801 in the communication apparatus 80 is configured to perform the foregoing communication method, for example, steps performed by the terminal in the embodiment in FIG. 2. For related content, refer to the foregoing descriptions. Details are not described herein again.

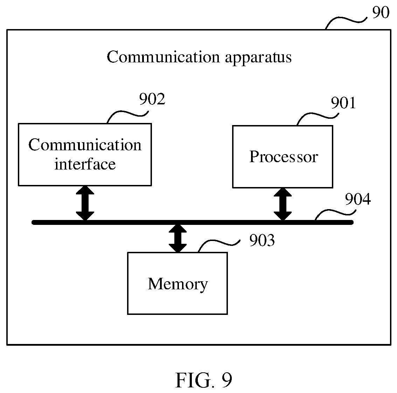

FIG. 9 is a diagram of a structure of another communication apparatus 90 according to an embodiment of this application. The communication apparatus 90 may be a network device, or may be a component (for example, a chip, a software module, or a hardware module) in the network device. The communication apparatus 90 may include at least one processor 901. Optionally, the communication apparatus 90 may further include a communication interface 902. Further, optionally, the communication apparatus 90 may further include at least one memory 903. Further, optionally, the communication apparatus 90 may further include a bus 904. The processor 901, the communication interface 902, and the memory 903 are connected to each other through the bus 904.

It should be understood that division into the units in the communication apparatuses in FIG. 8 and FIG. 9 is merely logical function division. During actual implementation, all or a part of the units may be integrated into a physical entity, or may be physically separated. In addition, the units in the communication apparatus may be implemented in a form of software invoked by a processor. For example, the communication apparatus includes a processor, the processor is connected to a memory, the memory stores instructions, and the processor invokes the instructions stored in the memory, to implement any one of the foregoing methods or implement functions of the units in the communication apparatus. The processor is, for example, a general-purpose processor, for example, a central processing unit (Central Processing Unit, CPU) or a microprocessor, and the memory is a memory inside the communication apparatus or a memory outside the communication apparatus. Alternatively, the units in the communication apparatus may be implemented in a form of a hardware circuit, and functions of a part or all of the units may be implemented by designing the hardware circuit. The hardware circuit may be understood as one or more processors. For example, in an implementation, the hardware circuit is an application-specific integrated circuit (application-specific integrated circuit, ASIC), and the functions of the part or all of the units are implemented by designing a logical relationship between elements in the circuit. For another example, in another implementation, the hardware circuit may be implemented by a programmable logic device (programmable logic device, PLD). A field programmable gate array (Field Programmable Gate Array, FPGA) is used as an example. The field programmable gate array may include a large quantity of logic gate circuits. A configuration file is used to configure a connection relationship between the logic gate circuits, to implement the functions of the part or all of the units. All the units of the communication apparatus may be implemented in the form of the software invoked by the processor, or may be implemented in the form of the hardware circuit, or a part of the units may be implemented in the form of the software invoked by the processor, and a remaining unit may be implemented in the form of the hardware circuit.

In the embodiments in FIG. 8 and FIG. 9, the processor is a circuit having a signal processing capability. In an implementation, the processor may be a circuit having an instruction reading and running capability, for example, a central processing unit (Central Processing Unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of a part or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep Learning Processing Unit, DPU).

It can be learned that each unit in the communication apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or a part of the units in the communication apparatus may be integrated, or may be independently implemented. In an implementation, these units are integrated and implemented in a form of a system-on-a-chip (system-on-a-chip, SOC). The SOC may include at least one processor, configured to implement any one of the foregoing methods or implement functions of the units of the communication apparatus. Types of the at least one processor may be different. For example, the at least one processor includes a CPU and an FPGA, a CPU and an artificial intelligence processor, or a CPU and a GPU.

Optionally, the processor 901 may be a processor (referred to as a dedicated processor for ease of differentiation) dedicated to performing the method, or may be a processor that invokes a computer program to perform the method, for example, a general-purpose processor. Optionally, the at least one processor may alternatively include both the dedicated processor and the general-purpose processor. Optionally, when the communication apparatus 90 includes the at least one processor 901, the computer program may be stored in the memory 903.

The communication interface 902 may be configured to provide an information input or output for the at least one processor, and/or the communication interface 902 may be further configured to receive data sent from the outside and/or send data to the outside, and may be a wired link interface including, for example, an ethernet cable, or may be a wireless link (wireless fidelity (wireless fidelity, Wi-Fi), Bluetooth, universal wireless transmission, an in-vehicle short-range communication technology, another short-range wireless transmission technology, or the like) interface. Optionally, the communication interface 902 may further include a transmitter (for example, a radio frequency transmitter or an antenna), a receiver, or the like coupled to the interface.

The memory 903 is configured to provide storage space, and the storage space may store data such as an operating system and a computer program. The memory 803 may be one or a combination of a random access memory (random access memory, RAM), a read-only memory (read-only memory, ROM), an erasable programmable read-only memory (erasable programmable read-only memory, EPROM), a portable read-only memory (compact disc read-only memory, CD-ROM), or the like. The at least one processor 901 in the communication apparatus 90 is configured to perform the foregoing communication method, for example, steps performed by the network device in the embodiment in FIG. 2. For related content, refer to the foregoing descriptions. Details are not described herein again.

This application further provides a terminal. The terminal includes the communication apparatus in FIG. 6 or FIG. 8.

This application further provides a network device. The network device includes the communication apparatus in FIG. 7 or FIG. 9.

This application further provides a communication system. The communication system includes a terminal and a network device. The terminal includes the communication apparatus in FIG. 6 or FIG. 8. The network device includes the communication apparatus in FIG. 7 or FIG. 9.

This application further provides a computer-readable storage medium. The computer-readable storage medium stores instructions. When the instructions are run on at least one processor, the foregoing communication method, for example, the method in FIG. 2, is implemented.

This application further provides a computer program product. The computer program product includes computer instructions. When the computer instructions are executed by a computing device, the foregoing communication method, for example, the method in FIG. 2, is implemented.

In embodiments of this application, a term like "example" or "for example" is used to represent giving an example, an illustration, or a description. Any embodiment or design scheme described as an "example" or "for example" in this application should not be construed as being more preferred or having more advantages than another embodiment or design scheme. Exactly, use of the term like "example" or "for example" is intended to present a related concept in a specific manner.

In embodiments of this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between associated objects.

In addition, unless otherwise stated, ordinal numbers such as "first" and "second" in embodiments of this application are used to distinguish between a plurality of objects, but are not intended to limit an order, a time sequence, priorities, or importance of the plurality of objects. For example, a first device and a second device are merely for ease of description, and do not indicate a difference of the first device and the second device in terms of a structure and a degree of importance. In some embodiments, the first device and the second device may alternatively be the same device.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application should fall within the protection scope of this application.

Persons of ordinary skill in the art may understand that all or a part of the steps of the foregoing embodiments may be implemented by hardware or a program instructing related hardware. The program may be stored in a computer-readable storage medium. The storage medium may be a read-only memory, a magnetic disk, an optical disc, or the like.

The foregoing descriptions are merely specific implementations of this application, but are not intended to limit the protection scope of this application. Any variation or replacement readily figured out by persons skilled in the art in the technical scope disclosed in this application shall fall within the protection scope of this application. Therefore, the protection scope of this application shall be subject to the protection scope of the claims.

## Claims

1. A communication method, wherein the method comprises:
obtaining learning-related status information associated with an artificial intelligence AI task, wherein the learning-related status information comprises one or more of resource status information, environment status information, model performance information, and dataset status information; and
sending the learning-related status information, wherein the learning-related status information is used to perform lifecycle management on a model associated with the AI task.

2. The method according to claim 1, wherein before obtaining the learning-related status information, the method further comprises:
receiving indication information, wherein the indication information indicates a manner of sending the learning-related status information.

3. The method according to claim 2, wherein the indication information comprises reference time, and sending the learning-related status information comprises:
sending the learning-related status information when the reference time is met.

4. The method according to claim 2, wherein the indication information comprises a trigger condition, and sending the learning-related status information comprises:
sending the learning-related status information when the trigger condition is met.

5. The method according to any one of claims 1 to 4, wherein the method further comprises:
sending indication information of a task identifier, wherein the indication information of the task identifier indicates the associated AI task.

6. The method according to any one of claims 1 to 5, wherein the resource status information comprises a resource headroom, and the resource headroom comprises a computing power headroom and/or a storage headroom.

7. The method according to claim 6, wherein the resource status information comprises a plurality of task identifiers and a plurality of resource headrooms, and each of the plurality of task identifiers represents an AI task associated with one of the plurality of resource headrooms.

8. The method according to claim 7, wherein the resource status information is carried in medium access control control element MAC-CE signaling, the MAC-CE signaling comprises a task identifier field and a resource headroom CPH field, the task identifier field comprises the task identifier, and the CPH field comprises the resource headroom.

9. The method according to claim 8, wherein the method further comprises:
sending first indication information, wherein the first indication information indicates that the learning-related status information is from a first-type AI task or a second-type AI task, the first-type AI task comprises one or more preset tasks, and the second-type AI task comprises one or more AI tasks other than the first-type AI task.

10. The method according to claim 9, wherein the first indication information is a task identifier.

11. The method according to any one of claims 1 to 10, wherein the environment status information comprises first parameter information, and the first parameter information comprises one or more of a system parameter, a scenario type, and a model identifier.

12. The method according to claim 11, wherein the environment status information comprises a plurality of task identifiers and a plurality of pieces of first parameter information, and each of the plurality of task identifiers represents an AI task associated with one of the plurality of pieces of first parameter information.

13. The method according to claim 12, wherein the environment status information is carried in MAC-CE signaling, the MAC-CE signaling comprises a task identifier field, a system parameter field, a scenario type field, and a model identifier field, the task identifier field comprises the task identifier, the system parameter field comprises the system parameter, the scenario type field comprises the scenario type, and the model identifier field comprises the model identifier.

14. The method according to any one of claims 1 to 13, wherein the model performance information comprises second parameter information, the second parameter information comprises one or more of a model identifier, model performance, fallback performance, and a fallback indication, the model performance represents performance of a model used for the associated AI task, the fallback performance represents system performance after the associated AI task falls back from model execution to non-model execution, the fallback indication represents whether fallback needs to be performed on the associated AI task, and the model identifier comprises a model identifier of one or more models in the model associated with the AI task.

15. The method according to claim 14, wherein the model performance information comprises a plurality of task identifiers and a plurality of pieces of second parameter information, and each of the plurality of task identifiers represents an AI task associated with one of the plurality of pieces of second parameter information.

16. The method according to claim 15, wherein the model performance information is carried in MAC-CE signaling, the MAC-CE signaling comprises a task identifier field, a model identifier field, a model performance field, a fallback performance field, and a fallback indication field, the task identifier field comprises the task identifier, the model identifier field comprises the model identifier, the model performance field comprises the model performance, the fallback performance field comprises the fallback performance, and the fallback indication field comprises the fallback indication.

17. The method according to any one of claims 1 to 16, wherein the dataset status information comprises third parameter information, the third parameter information comprises one or more of a dataset size, data collection time, a data collection position, and a data distribution description, the data collection time comprises collection time of a latest data sample in a dataset collected for the associated AI task and collection time of an oldest data sample in the dataset, the dataset size represents a quantity of data samples in the dataset collected for the associated AI task, the data collection position represents a position of data in the dataset collected for the associated AI task, and the data distribution description represents distribution of the data in the dataset collected for the associated AI task.

18. The method according to claim 17, wherein the dataset status information comprises a plurality of task identifiers and a plurality of pieces of third parameter information, and each of the plurality of task identifiers represents an AI task associated with one of the plurality of pieces of third parameter information.

19. The method according to claim 18, wherein the dataset status information is carried in MAC-CE signaling, the MAC-CE signaling comprises a task identifier field, a dataset size field, a latest data collection time field, an oldest data collection time field, a data collection position field, and a data distribution description field, the task identifier field comprises the task identifier, the dataset size field comprises the dataset size, the latest data collection time field comprises the latest data collection time, the oldest data collection time field comprises the oldest data collection time, the data collection position field comprises the data collection position, and the data distribution description field comprises the data distribution description.

20. A communication method, wherein the method comprises:
receiving learning-related status information associated with an artificial intelligence AI task, wherein the learning-related status information comprises one or more of resource status information, environment status information, model performance information, and dataset status information; and
performing, based on the learning-related status information, lifecycle management on a model associated with the AI task.

21. The method according to claim 20, wherein before receiving the learning-related status information, the method further comprises:
sending indication information, wherein the indication information indicates a manner of sending the learning-related status information.

22. The method according to claim 21, wherein the indication information comprises reference time, and the indication information indicates to send the learning-related status information when the reference time is met.

23. The method according to claim 21, wherein the indication information comprises a trigger condition, and the indication information indicates to send the learning-related status information when the trigger condition is met.

24. The method according to any one of claims 20 to 23, wherein the method further comprises:
receiving indication information of a task identifier, wherein the indication information of the task identifier indicates the associated AI task.

25. The method according to any one of claims 20 to 24, wherein the resource status information comprises a resource headroom, and the resource headroom comprises a computing power headroom and/or a storage headroom.

26. The method according to claim 25, wherein the resource status information comprises a plurality of task identifiers and a plurality of resource headrooms, and each of the plurality of task identifiers represents an AI task associated with one of the plurality of resource headrooms.

27. The method according to claim 26, wherein the resource status information is carried in medium access control control element MAC-CE signaling, the MAC-CE signaling comprises a task identifier field and a resource headroom CPH field, the task identifier field comprises the task identifier, and the CPH field comprises the resource headroom.

28. The method according to claim 27, wherein the method further comprises:
receiving first indication information, wherein the first indication information indicates that the learning-related status information is from a first-type AI task or a second-type AI task, the first-type AI task comprises one or more preset tasks, and the second-type AI task comprises one or more AI tasks other than the first-type AI task.

29. The method according to claim 28, wherein the first indication information is a task identifier.

30. The method according to any one of claims 20 to 29, wherein the environment status information comprises first parameter information, and the first parameter information comprises one or more of a system parameter, a scenario type, and a model identifier.

31. The method according to claim 30, wherein the environment status information comprises a plurality of task identifiers and a plurality of pieces of first parameter information, and each of the plurality of task identifiers represents an AI task associated with one of the plurality of pieces of first parameter information.

32. The method according to claim 31, wherein the environment status information is carried in MAC-CE signaling, the MAC-CE signaling comprises a task identifier field, a system parameter field, a scenario type field, and a model identifier field, the task identifier field comprises the task identifier, the system parameter field comprises the system parameter, the scenario type field comprises the scenario type, and the model identifier field comprises the model identifier.

33. The method according to any one of claims 20 to 32, wherein the model performance information comprises second parameter information, the second parameter information comprises one or more of a model identifier, model performance, fallback performance, and a fallback indication, the model performance represents performance of a model used for the associated AI task, the fallback performance represents system performance after the associated AI task falls back from model execution to non-model execution, the fallback indication represents whether fallback needs to be performed on the associated AI task, and the model identifier comprises a model identifier of one or more models in the model associated with the AI task.

34. The method according to claim 33, wherein the model performance information comprises a plurality of task identifiers and a plurality of pieces of second parameter information, and each of the plurality of task identifiers represents an AI task associated with one of the plurality of pieces of second parameter information.

35. The method according to claim 34, wherein the model performance information is carried in MAC-CE signaling, the MAC-CE signaling comprises a task identifier field, a model identifier field, a model performance field, a fallback performance field, and a fallback indication field, the task identifier field comprises the task identifier, the model identifier field comprises the model identifier, the model performance field comprises the model performance, the fallback performance field comprises the fallback performance, and the fallback indication field comprises the fallback indication.

36. The method according to any one of claims 20 to 35, wherein the dataset status information comprises third parameter information, the third parameter information comprises one or more of a dataset size, data collection time, a data collection position, and a data distribution description, the data collection time comprises collection time of a latest data sample in a dataset collected for the associated AI task and collection time of an oldest data sample in the dataset, the dataset size represents a quantity of data samples in the dataset collected for the associated AI task, the data collection position represents a position of data in the dataset collected for the associated AI task, and the data distribution description represents distribution of the data in the dataset collected for the associated AI task.

37. The method according to claim 36, wherein the dataset status information comprises a plurality of task identifiers and a plurality of pieces of third parameter information, and each of the plurality of task identifiers represents an AI task associated with one of the plurality of pieces of third parameter information.

38. The method according to claim 37, wherein the dataset status information is carried in MAC-CE signaling, the MAC-CE signaling comprises a task identifier field, a dataset size field, a latest data collection time field, an oldest data collection time field, a data collection position field, and a data distribution description field, the task identifier field comprises the task identifier, the dataset size field comprises the dataset size, the latest data collection time field comprises the latest data collection time, the oldest data collection time field comprises the oldest data collection time, the data collection position field comprises the data collection position, and the data distribution description field comprises the data distribution description.

39. A communication apparatus, wherein the communication apparatus comprises a module configured to implement the method according to any one of claims 1 to 19.

40. A communication apparatus, wherein the communication apparatus comprises a module configured to implement the method according to any one of claims 20 to 38.

41. A communication apparatus, wherein the communication apparatus comprises a processor; and
when the processor invokes a computer program or instructions in a memory, the method according to any one of claims 1 to 19 is implemented.

42. A communication apparatus, wherein the communication apparatus comprises a processor; and
when the processor invokes a computer program or instructions in a memory, the method according to any one of claims 20 to 38 is implemented.

43. A communication apparatus, comprising a logic circuit and an interface, wherein the logic circuit is coupled to the interface, the interface is configured to input and/or output information, and the logic circuit is configured to perform the method according to any one of claims 1 to 38.

44. The apparatus according to any one of claims 41 to 43, wherein the communication apparatus is a chip or a chip system.

45. A communication system, wherein the communication system comprises the communication apparatus according to claim 39 and the communication apparatus according to claim 40; or
the communication system comprises the communication apparatus according to claim 41 and the communication apparatus according to claim 42.

46. A computer-readable storage medium, wherein the computer-readable storage medium is configured to store instructions or a computer program; and
when the instructions or the computer program is executed, the method according to any one of claims 1 to 38 is implemented.

47. A computer program product, comprising instructions or a computer program, wherein
when the instructions or the computer program is executed, the method according to any one of claims 1 to 38 is implemented.
